# EUROPEAN PATENT SPECIFICATION

(11) **EP 3 454 114 B1**
(45) Date of publication and mention of the grant of the patent: **07.12.2022**
(21) Application number: 18193867.1
(22) Date of filing: 11.09.2018
(51) Int. Cl.: G02F 1/1335, G02F 1/1347, G02F 1/1333

(54) **ELECTRONIC DISPLAY WITH MULITIPLE POLARIZER LAYERS**
ELEKTRONISCHE ANZEIGE MIT MEHREREN POLARISATORSCHICHTEN
AFFICHAGE ÉLECTRONIQUE PRÉSENTANT PLUSIEURS COUCHES DE POLARISEUR

(30) Priority: 11.09.2017 US 201715700924
(43) Date of publication of application: 13.03.2019
(73) Proprietor: Visteon Global Technologies, Inc., Van Buren Township, MI 48111-5711 (US)
(72) Inventor: Weindorf, Paul Fredrick Luther, Novi, MI Michigan 48377 (US); Hayden, Brian John, Royal Oak, MI Michigan 48073 (US); Sharif, Qais, Northville, MI Michigan 48168 (US)
(74) Representative: Dummett Copp LLP

(56) References cited:
- US-A- 5 220 442
- US-A1- 2014 120 275
- US-A1- 2015 009 444
- US-A1- 2016 209 684
- US-A1- 2016 303 970
- US-A1- 2016 306 219

## Description

### BACKGROUND

Electronic displays are provided in many contexts to electronically render digital information to a viewer. The electronic displays receive information, and render the information through lighted cells in patterns that reflect the texts and pictures employed to convey the information.

The electronic displays may be implemented in a variety of environments where electronic displays have not traditionally been employed, such as a vehicle, home appliance, advertisement/billboard, and the like. Accordingly, for aesthetic purposes, when employing said electronic displays, ensuring that said electronic displays blend into a bezel or background may be desired.

This effect, also known as a "dead-panel" appearance or a "dead-front" appearance, and has been attempted by numerous implementers of electronic displays integrated into a variety of contexts and environments. Several implementations have been attempted; however, with each implementation drawbacks become apparent.

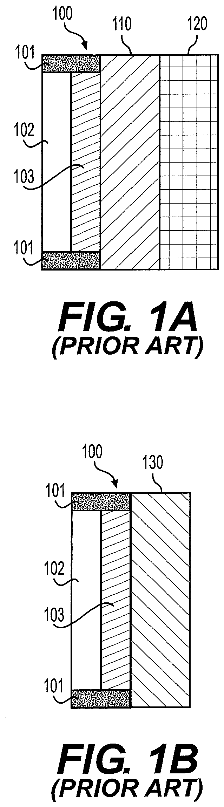

Figure 1A illustrates a side-view of a prior art implementation of an electronic display. As shown, a display 100 is provided. The display 100 is employed to providing electronic content to a viewer of the electronic display. The display screen 100 includes a bezel 101 defining a border of the display screen. Defining the portion within the bezel 101 is a display portion. The display portion includes a backlit display 102 and a display linear polarizer 103.

The display 100 is provided with a first layer 110 directly opposed to the display 100. This first layer 110 is a neutral density filter. A neutral density filter is a filter that reduces or modifies the intensity of all wavelengths or colors, of light equally, giving no changes in hue of color rendition. The filter transmission may range from colorless (clear) to grey (opaque), but the transmission rate is constant.

Also shown is an AR film 120 (disposed on the first layer 110). The AR film 120 may be provided to cancel first surface light reflections to minimize a viewer from seeing visibility variations from the electronic display 100 due to the lighting environment to which the electronic display 100 is exposed. Figure 1B illustrates a side-view of a prior art implementation of another electronic display. As shown, an electronic display 100 is provided with a dimmable lens 130. When the electronic display 100 is intended to be off, the dimmable lens 130 is configured to be in a low transmission state, and when the electronic display 100 is intended to be on, the dimmable lens 130 is adjusted to allow the proper luminance to be presented. The prior art lens dims both the ambient light and the display transmitted light equally and does not provide a transmission preference to the display transmitted light.

The term "lens" as used herein is conventionally used in technical field of displays to mean a substantially transparent layer or sheet, which may be clear or colored and either planar or curved, and which may be provided separately or in conjunction with other layers, and positioned between the viewer and display elements for providing information to the viewer.

In either of the solutions proffered above, a backlighting strength associated with the electronic display 100 has to be adjusted accordingly, and often times increased in order to adjust for the compensated layers. Thus, while implementing dead-front solutions, the efficiency of existing electronic displays 100 may be insufficient.

US 5220442 describes a display device having a primary, image-defining display in series with a secondary display, with the primary and secondary displays each having similarly sized and located light shutters to avoid light leakage when corresponding shutters on each display are closed. US 2016/0209684 describes a display device including a liquid crystal display that has a display area and a surrounding hidden area, and a liquid crystal shutter that has a first area corresponding to the display area and a second area corresponding to the hidden area. The first area of the shutter is switched to a transparent state when the display area is active and to an opaque state when the display area is not active, while the second area is set to an opaque state irrespective of whether the display area is active.

### SUMMARY

The following description relates to providing a system, method, and device for implementing an electronic display with a dimmable lens for a dead-front implementation. Exemplary embodiments may also be directed to any of the system, the method, or an application disclosed herein.

According to the invention, there is provided an electronic as defined in claim 1.

In an example, the electronic display further includes a transparent lens.

In another example, the active polarizer is defined as a guest-host dichroic dye liquid crystal system.

In another example, the electronic circuit is configured to apply voltage to the active polarizer to allow at least 70% transmission.

In another example, the backlight display, the first linear polarizer, the active polarizer, and the lens are optically bonded with each other.

In another example, the backlight display physically abuts the first linear polarizer, the first linear polarizer physically abuts the active polarizer, and the active polarizer physically abuts the lens.

In another example, the electronic display further includes an air gap between the first linear polarizer and the active polarizer.

In another example, the backlight display physically abuts the first linear polarizer, and the active polarizer physically abuts the lens.

In another example, the electronic display further includes a second linear polarizer.

Additional features of the invention will be set forth in the description which follows, and in part will be apparent from the description, or may be learned by practice of the invention.

It is to be understood that both the foregoing general description and the following detailed description are exemplary and explanatory and are intended to provide further explanation of the invention as claimed. Other features and aspects will be apparent from the following detailed description, the drawings, and the claims.

### DESCRIPTION OF THE DRAWINGS

The invention will now be further described, by way of example only, and with reference to the accompanying drawings in which like numerals refer to like items, and in which:
Figures 1A and 1B illustrate a side-view of a prior art implementation of an electronic display;
Figure 2 illustrates an example of an active polarizer employing the aspects disclosed herein;
Figure 3 illustrates a side-view of an example embodiment of an electronic display augmented with a dimmable lens system according to the aspects disclosed herein;
Figure 4 illustrates a method of manufacturing the structure shown in Figure 3; and
Figures 5 to10 illustrate side-views of other exemplary embodiments of an electronic display according to the aspects disclosed herein.

### DETAILED DESCRIPTION

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

Disclosed herein is a dimmable lens system configured to provide a dead-front appearance when the electronic display is not being employed ("off-state"), and a substantially dead-front appearance when the electronic display is employed ("on-state"). The aspects disclosed herein allow for advantages in the following manners:
1) Low Haze;
2) A high dimming transmission range from 35% (driven state) to 5% (nondriven state) for non-polarized ambient light and a high display polarized light transmission of about 70% when driven in the "on" state;
3) Fast response time;
4) A small color shift;
5) Employment with flexible displays (or non-linear shaped displays);
6) None reliance on electrochromic technology; and
7) Cost savings.

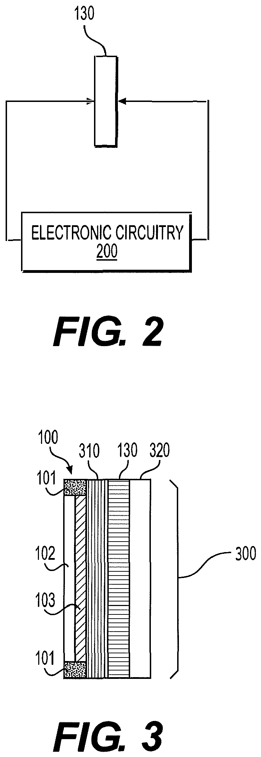

Figure 2 illustrates an example of an active polarizer 130 employing the aspects disclosed herein. The active polarizer 130 is electronically coupled to an electronic circuit 200 for controlling whether light from a backlight display screen passes to the viewer or is blocked. The electronic circuit 200 connects to the active polarizer 130 via a first node and a second node. As the electronic circuit 200 applies voltage to the active polarizer 130, the state of the polarization changes accordingly. Thus, the active polarizer 130 may employ both an on-state and an off-state. In the on-state, display content disposed on one side of an active polarizer 130 is visible by a viewer. In an off-state, the active polarizer 130 absorbs light waves. In this manner, the ambient light is absorbed and essentially no reflected light from behind the lens is visible to the viewer during the off state.

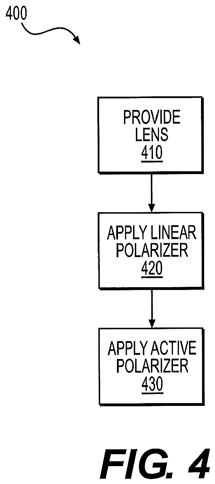

The active polarizer 130 is based on a guest-host dichroic dye liquid crystal system. The guest dye is a collection of elongated molecules that can be either orthogonal or parallel based on the applied voltage. The orientation of the elongated molecules ultimately determines the polarization associated with the active polarizer 130. Figure 3 illustrates a side-view of an example embodiment of an electronic display augmented with a dimmable lens system according to the aspects disclosed herein. Figure 4 illustrates a method 400 of manufacturing the structure shown in Figure 3. As shown, the structure in Figure 3 includes a display screen 100. The display screen 100 may be any technology employed to provide electronic content to a viewer, such as a TFT screen. The display screen 100 includes a bezel 101 defining a border of the display screen. Defining the portion within the bezel 101 is a display portion. The display portion includes a backlit display 102 and a display linear polarizer 103. The display linear polarizer 103 causes light produced and propagated by the backlit display 102 to undergo a linear polarization effect.

As shown in Figure 3, a lens 320 is provided (410). On the side in which the display screen 100 presents content, a first linear polarizer 310 is added (420). The first linear polarizer 310 is disposed on the external surface of the display screen, this being the surface on which the backlight display projects light, and which is preferably an external surface of the display linear polarizer, as illustrated. The first linear polarizer 310 also extends beyond the periphery of the display screen to extend over the surrounding bezel 101, and similarly so does the active polarizer 310. Preferably, the bezel is flush with the external surface of the display screen as illustrated. The first linear polarizer 310 is also disposed on the external surface of the bezel 101.

Linear polarizers are polarizers designed to linearly polarize incoming light. Passing white light through a linear polarizer blocks half of the incident light, causing the electric field component to displace so that it oscillates in only one plane with respect to the direction of propagation.

Disposed on the first linear polarizer 310 is an active polarizer 130 (430). The active polarizer 130 is similar to the one shown in Figure 2 and is configured to operate in the manner described above. Also shown are a glass and/or plastic see-through lens 320 (although as explained further, in other embodiments, the lens 320 may be omitted). The elements in Figure 3 may be optically bonded together. The first linear polarizer transmission axis is aligned to the output polarization angle of the display. The active polarizer transmission axis is oriented to be orthogonal to the first linear polarizer transmission axis. Therefore, when the active polarizer is not activated (polarized state), the polarized light passing through the first linear polarizer is extinguished by the active polarizer. Conversely, when the active polarizer is activated (non-polarized state), linearly polarized light from the display is transmitted through both the active polarizer and first linear polarizer with substantial transmission of about 70%.

The first linear polarizer 310 provides two benefits. First, the polarization of light emitted by the display may not be exactly linear for all transmitted colours and for all viewing angles. The first linear polarizer 310 therefore ensures that the light transmitted from the display into the active polarizer is at a polarization orthogonal to the active polarizer transmission axis when the active polarizer is in the off state, thereby ensuring that the display appears to the viewer to be black when the display is to be hidden from view. Second, the active polarizer 130 in the off state and the first linear polarizer 310 will together block ambient light that is transmitted into the active polarizer from reaching the surrounding display bezel, thereby ensuring that the display bezel is hidden from view whenever the display is also hidden from view, thereby ensuring a dead-front effect.

Employing the aspects disclosed herein, and shown in Figure 3, the required backlighting needed when using a linear/active polarizer versus not using a linear/active polarizer is much less. Thus, the amount of power consumption realized with an implementation in Figure 3 is drastically reduced. Further, because a lesser powered backlight is employed, thermal gains associated with this implementation may also be realized.

Specifically, employing the electronic display 300 shown in Figure 3, the inventors have discovered that the active polarizer 130 may be driven to provide 70% display transmission. In other examples (not employing the structure), the prior art method may employ a neutral density filter of 15% transmission. The inventors have discovered that the use of the active polarizer lens allows the amount of luminance required to be reduced by approximately 85% compared to the use of a static 15% neutral density lens.

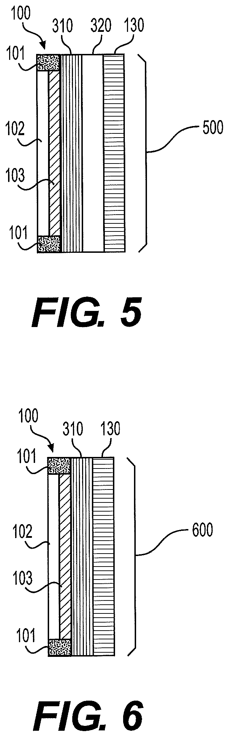

Figures 5 to10 illustrate side-views of several permutations of the electronic display 300. Each of the electronic displays shown in Figures 5 to 10 have a display screen 100, the first linear polarizer element 310 and an active polarizing element 130.

The first linear polarizer 310 associated with the active polarizer 130 is aligned with the display polarizer transmission angle such that the display polarized light is substantially transmitted. The active polarizer 130 transmission angle is oriented to be substantially orthogonal to the first linear polarizer 310 transmission angle and therefore light is mostly absorbed when the active polarizer 130 is in the polarization state.

Although not shown, the display screen 100 includes both a display lighting element and a display linear polarizer disposed thereon.

As shown in Figure 5, the electronic display 500 differs from electronic display in that the active polarizer 130 is disposed on an opposite surface of the lens 320, and the lens 320 is physically disposed in between the first linear polarizer 310 and the active polarizer 130. As shown in Figure 6, the lens 320 is not implemented in the electronic display 600.

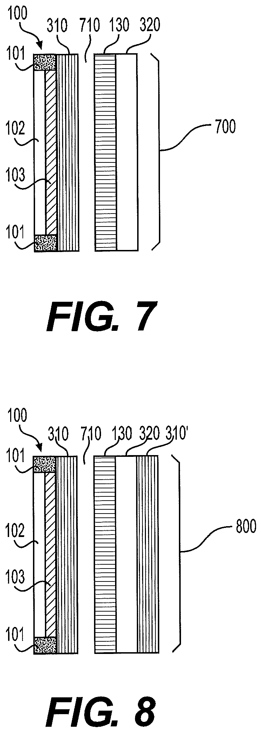

In Figure 7, the electronic display 700 is similar to the electronic display 300, except an air gap 710 is disposed between the first linear polarizer 310 and the active polarizer 130. In Figure 8, the electronic display 800 is substantially similar to the electronic display 700; however, a second linear polarizer 310' is also provided, the polarization angle of the second linear polarizer 310' being aligned with that of the first linear polarizer 310.

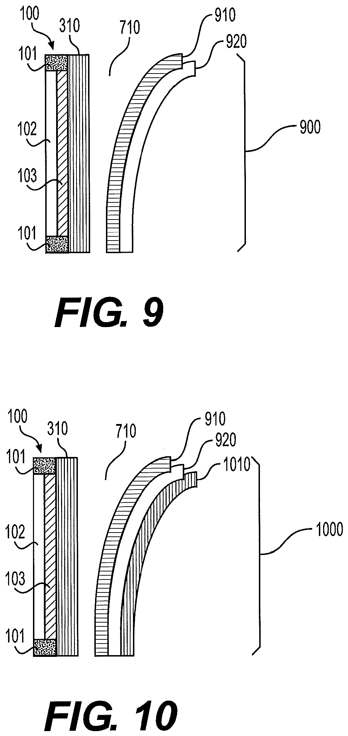

Figures 9 and 10 illustrate that the aspects disclosed herein may be implemented with screens of a non-linear type (and specifically curved). As shown in Figure 9 via electronic display 900, the active polarizer 320 is replaced with a curved active polarizer 910 and a curved lens 920. In Figure 10, the electronic display 1000 is substantially similar to electronic display 900; however, a second curved linear polarizer 1010 is also provided, the polarization angle of the second curved linear polarizer 1010 being aligned with that of the first linear polarizer 310.

The second linear polarizer 310', 1010 is useful when there is an air gap 710 between the rear surface of the active polarizer 130, 910 and the front surface of the display and surrounding bezel 101. The provision of an air gap may be desirable for any of several reasons. For example, the designer may, for aesthetic reasons, wish for the display to appear to be recessed, for example deeper within an instrument panel. Or, the designer may wish for the external surfaces of the display assembly nearest the viewer to be angled or curved with respect to the plane of the display screen itself.

Another reason is when there are other display elements (not illustrated), for example a light or a gauge, in an area laterally adjacent to the display and bezel, which are not covered over by the first linear polarizer 310. Such a laterally adjacent area, and any associated display elements, will then also be hidden from view when the active polarizer 130, 910 is in the off state. This is because the active polarizer 130, 910 in the off state and the second linear polarizer 310', 1010 will together block ambient light that is transmitted into the second linear polarizer 310', 1010 from reaching the laterally adjacent area and associated display elements, in addition to blocking ambient light from falling on the first linear polarizer 310, which therefore requires no antireflection coating to suppress reflected ambient light and remain hidden. The first linear polarizer 310 continues to provide the benefit of ensuring that the light transmitted from the display into the active polarizer 130, 910 is at a polarization orthogonal to the active polarizer transmission axis when the active polarizer is in the off state.

In each of the embodiments shown in Figures 5 to 10, the gains described in Figures 3 and 4 are also achieved. Thus, these implementations allow for less backlighting to be used, and thus gains in power and thermal energy reductions being achieved.

The active polarizers shown above may be electrically coupled to an automatic luminance control system, thereby being modified based on a user-defined amount configured to provide the dead-front appearance.

As a person skilled in the art will readily appreciate, the above description is meant as an illustration of implementation of the principles this invention. This description is not intended to limit the scope or application of this invention in that the invention is susceptible to modification, variation and change, without departing from scope of this invention, as defined in the following claims.

## Claims

1. An electronic display (300), comprising:
a backlight display (102) configured to be turned on and off, the backlight display (102) including a display linear polarizer (103);
a bezel (101) surrounding the backlight display (102);
a surface on which the backlight display (102) projects polarized light from the display linear polarizer (103);
a first linear polarizer (310) disposed on said surface, a transmission angle of the first linear polarizer (310) being aligned with the polarisation direction of said projected polarized light such that said projected light is substantially transmitted by the first linear polarizer (310), wherein the first linear polarizer (310) extends beyond a periphery of the backlight display (102) to cover the bezel (101); and
an active polarizer (130; 910) coupled to an electronic circuit (200) and extending over the first linear polarizer (310) beyond the periphery of the backlight display (102) in a plan view, the active polarizer (130; 910) having a polarizing off state and a non-polarizing on state, and the transmission axis in the off state being oriented to be orthogonal to the first linear polarizer transmission axis, whereby in the off state the active polarizer (130; 910) absorbs light transmitted by the first linear polarizer (310) and in the on state the active polarizer (130; 910) passes light transmitted by the first linear polarizer (310), the electronic circuit (200) being configured to turn on the active polarizer (130; 910) when the backlight display (102) is on, and turn off the active polarizer (130; 910) when the backlight display (102) is off.

2. The electronic display according to claim 1, wherein the active polarizer (130) is a guest-host dichroic dye liquid crystal system.

3. The electronic display according to claim 1 or claim 2, further comprising a transparent lens (320), wherein the backlight display (102), the first linear polarizer (310), the active polarizer (130), and the lens (320) are optically bonded with each other.

4. The electronic display according to claim 3, wherein the backlight display (102) physically abuts the first linear polarizer (310), the first linear polarizer (310) physically abuts the active polarizer (130), and the active polarizer (130) physically abuts the lens (320).

5. The electronic display according to claim 3, wherein the backlight display (102) physically abuts the first linear polarizer (310), the first linear polarizer (310) physically abuts the lens (320), and the lens (320) physically abuts the active polarizer (130).

6. The electronic display according to claim 1 or claim 2, further comprising an air gap (710) between the first linear polarizer (310) and the active polarizer (130; 910).

7. The electronic display according to claim 6, further comprising a transparent lens (320), wherein the backlight display (102) physically abuts the first linear polarizer (310), and the active polarizer (130; 910) physically abuts the lens (320; 920).

8. The electronic display according to claim 7, wherein the active polarizer (910) and the lens (920) are curved where these abut.

9. The electronic display according to any one of claims 6 to 8, further comprising a second linear polarizer (310'; 1010), wherein the backlight display (102) physically abuts the first linear polarizer (310) and the active polarizer (130; 910) physically abuts the second linear polarizer (310'; 1010).

10. The electronic display according to claim 9, wherein the active polarizer (910) and the second linear polarizer (1010) are curved where these abut.

11. The electronic display according to claim 9 or claim 10, wherein the lens (320; 920) physically abuts the second linear polarizer (310'; 1010).

12. The electronic display according to claim 11, wherein the lens (920) and the second linear polarizer (1010) are curved where these abut.

## Patentansprüche

1. Elektronische Anzeige (300), umfassend:
eine hintergrundbeleuchtete Anzeige (102), die dazu konfiguriert ist, ein- und ausgeschaltet zu werden, wobei die hintergrundbeleuchtete Anzeige (102) einen linearen Anzeigepolarisator (103) beinhaltet;
eine Einfassung (101), welche die hintergrundbeleuchtete Anzeige (102) umgibt;
eine Oberfläche, auf welche die hintergrundbeleuchtete Anzeige (102) polarisiertes Licht von dem linearen Anzeigepolarisator (103) projiziert;
einen ersten linearen Polarisator (310), der auf der Oberfläche angeordnet ist, wobei ein Übertragungswinkel des ersten linearen Polarisators (310) mit der Polarisationsrichtung des projizierten polarisierten Lichts ausgerichtet ist, sodass das projizierte Licht im Wesentlichen durch den ersten linearen Polarisator (310) übertragen wird,
wobei sich der erste lineare Polarisator (310) über einen Umfang der hintergrundbeleuchteten Anzeige (102) hinaus erstreckt, um die Einfassung (101) abzudecken; und
einen aktiven Polarisator (130; 910), der an eine elektronische Schaltung (200) gekoppelt ist und sich über den ersten linearen Polarisator (310) über den Umfang der hintergrundbeleuchteten Anzeige (102) in einer Draufsicht hinaus erstreckt, wobei der aktive Polarisator (130; 910) einen polarisierenden Aus-Zustand und einen nicht-polarisierenden Ein-Zustand aufweist und die Übertragungsachse im Aus-Zustand so ausgerichtet ist, dass sie orthogonal zu der Übertragungsachse des ersten linearen Polarisators ist,
wodurch der aktive Polarisator (130; 910) im Aus-Zustand Licht absorbiert, das von dem ersten linearen Polarisator (310) übertragen wird, und der aktive Polarisator (130; 910) im Ein-Zustand Licht durchlässt, das von dem ersten linearen Polarisator (310) übertragen wird,
wobei die elektronische Schaltung (200) dazu konfiguriert ist, den aktiven Polarisator (130; 910) einzuschalten, wenn die hintergrundbeleuchtete Anzeige (102) an ist, und den aktiven Polarisator (130; 910) auszuschalten, wenn die hintergrundbeleuchtete Anzeige (102) aus ist.

2. Elektronische Anzeige nach Anspruch 1, wobei der aktive Polarisator (130) ein Gast-Wirt-Flüssigkristallsystem mit dichroitischem Farbstoff ist.

3. Elektronische Anzeige nach Anspruch 1 oder Anspruch 2, ferner umfassend eine transparente Linse (320), wobei die hintergrundbeleuchtete Anzeige (102), der erste lineare Polarisator (310), der aktive Polarisator (130) und die Linse (320) optisch miteinander verbunden sind.

4. Elektronische Anzeige nach Anspruch 3, wobei die hintergrundbeleuchtete Anzeige (102) physisch an den ersten linearen Polarisator (310) angrenzt, der erste lineare Polarisator (310) physisch an den aktiven Polarisator (130) angrenzt und der aktive Polarisator (130) physisch an die Linse (320) angrenzt.

5. Elektronische Anzeige nach Anspruch 3, wobei die hintergrundbeleuchtete Anzeige (102) physisch an den ersten linearen Polarisator (310) angrenzt, der erste lineare Polarisator (310) physisch an die Linse (320) angrenzt und die Linse (320) physisch an den aktiven Polarisator (130) angrenzt.

6. Elektronische Anzeige nach Anspruch 1 oder Anspruch 2, ferner umfassend einen Luftspalt (710) zwischen dem ersten linearen Polarisator (310) und dem aktiven Polarisator (130; 910) .

7. Elektronische Anzeige nach Anspruch 6, ferner umfassend eine transparente Linse (320), wobei die hintergrundbeleuchtete Anzeige (102) physisch an den ersten linearen Polarisator (310) angrenzt und der aktive Polarisator (130; 910) physisch an die Linse (320; 920) angrenzt.

8. Elektronische Anzeige nach Anspruch 7, wobei der aktive Polarisator (910) und die Linse (920) dort, wo diese aneinander angrenzen, gekrümmt sind.

9. Elektronische Anzeige nach einem der Ansprüche 6 bis 8, ferner umfassend einen zweiten linearen Polarisator (310'; 1010), wobei die hintergrundbeleuchtete Anzeige (102) physisch an den ersten linearen Polarisator (310) angrenzt und der aktive Polarisator (130; 910) physisch an den zweiten linearen Polarisator (310'; 1010) angrenzt.

10. Elektronische Anzeige nach Anspruch 9, wobei der aktive Polarisator (910) und der zweite lineare Polarisator (1010) dort, wo diese aneinander angrenzen, gekrümmt sind.

11. Elektronische Anzeige nach Anspruch 9 oder Anspruch 10, wobei die Linse (320; 920) physisch an den zweiten linearen Polarisator (310'; 1010) angrenzt.

12. Elektronische Anzeige nach Anspruch 11, wobei die Linse (920) und der zweite lineare Polarisator (1010) dort, wo diese aneinander angrenzen, gekrümmt sind.

## Revendications

1. Affichage électronique (300), comprenant :
un affichage rétroéclairé (102) configuré pour être allumé et éteint, l'affichage rétroéclairé (102) comportant un polariseur linéaire d'affichage (103) ;
un cadre (101) entourant l'affichage rétroéclairé (102) ;
une surface sur laquelle l'affichage rétroéclairé (102) projette une lumière polarisée provenant du polariseur linéaire d'affichage (103) ;
un premier polariseur linéaire (310) disposé sur ladite surface, un angle de transmission du premier polariseur linéaire (310) étant aligné avec la direction de polarisation de ladite lumière polarisée projetée de sorte que ladite lumière projetée est sensiblement transmise par le premier polariseur linéaire (310),
dans lequel le premier polariseur linéaire (310) s'étend au-delà d'une périphérie de l'affichage rétroéclairé (102) pour couvrir le cadre (101) ; et
un polariseur actif (130 ; 910) couplé à un circuit électronique (200) et s'étendant sur le premier polariseur linéaire (310) au-delà de la périphérie de l'affichage rétroéclairé (102) dans une vue en plan, le polariseur actif (130 ; 910) ayant un état polarisant désactivé et un état non polarisant activé, et l'axe de transmission dans l'état désactivé étant orienté pour être orthogonal au premier axe de transmission de polariseur linéaire,
moyennant quoi, dans l'état désactivé, le polariseur actif (130 ; 910) absorbe la lumière transmise par le premier polariseur linéaire (310) et dans l'état activé, le polariseur actif (130 ; 910) laisse passer la lumière transmise par le premier polariseur linéaire (310),
le circuit électronique (200) étant configuré pour allumer le polariseur actif (130 ; 910) lorsque l'affichage rétroéclairé (102) est allumé, et éteindre le polariseur actif (130 ; 910) lorsque l'affichage rétroéclairé (102) est éteint.

2. Affichage électronique selon la revendication 1, dans lequel le polariseur actif (130) est un système à cristaux liquides à coloration dichroïque invité-hôte.

3. Affichage électronique selon la revendication 1 ou la revendication 2, comprenant en outre une lentille (320) transparente, dans lequel l'affichage rétroéclairé (102), le premier polariseur linéaire (310), le polariseur actif (130) et la lentille (320) sont optiquement liés les uns aux autres.

4. Affichage électronique selon la revendication 3, dans lequel l'affichage rétroéclairé (102) est physiquement en butée contre le premier polariseur linéaire (310), le premier polariseur linéaire (310) est physiquement en butée contre le polariseur actif (130) et le polariseur actif (130) est physiquement en butée contre la lentille (320).

5. Affichage électronique selon la revendication 3, dans lequel l'affichage rétroéclairé (102) est physiquement en butée contre le premier polariseur linéaire (310), le premier polariseur linéaire (310) est physiquement en butée contre la lentille (320) et la lentille (320) est physiquement en butée contre le polariseur actif (130).

6. Affichage électronique selon la revendication 1 ou la revendication 2, comprenant en outre une lame d'air (710) entre le premier polariseur linéaire (310) et le polariseur actif (130 ; 910).

7. Affichage électronique selon la revendication 6, comprenant en outre une lentille (320) transparente, dans lequel l'affichage rétroéclairé (102) est physiquement en butée contre le premier polariseur linéaire (310), et le polariseur actif (130 ; 910) est physiquement en butée contre la lentille (320 ; 920) .

8. Affichage électronique selon la revendication 7, dans lequel le polariseur actif (910) et la lentille (920) sont incurvés à leur butée.

9. Affichage électronique selon l'une quelconque des revendications 6 à 8, comprenant en outre un second polariseur linéaire (310' ; 1010), dans lequel l'affichage rétroéclairé (102) est physiquement en butée contre le premier polariseur linéaire (310) et le polariseur actif (130 ; 910) est physiquement en butée contre le second polariseur linéaire (310' ; 1010).

10. Affichage électronique selon la revendication 9, dans lequel le polariseur actif (910) et le second polariseur linéaire (1010) sont incurvés à leur butée.

11. Affichage électronique selon la revendication 9 ou la revendication 10, dans lequel la lentille (320 ; 920) est physiquement en butée contre le second polariseur linéaire (310' ; 1010).

12. Affichage électronique selon la revendication 11, dans lequel la lentille (920) et le second polariseur linéaire (1010) sont incurvés à leur butée.
